# EUROPÄISCHE PATENTANMELDUNG

(11) **EP 4 521 011 A1**
(43) Veröffentlichungstag der Anmeldung: **12.03.2025**
(21) Anmeldenummer: 24197799.0
(22) Anmeldetag: 02.09.2024
(51) Int. Cl.: F16L 15/06, F16L 19/02, F16L 15/00

(54) **ANORDNUNG MIT EINER KUPPLUNGSVERBINDUNG**

(30) Priorität: 11.09.2023 DE 102023124463
(71) Anmelder: AS Strömungstechnik GmbH, 73760 Ostfildern (DE)
(72) Erfinder: Szeteli, Andreas, 70794 Filderstadt (DE); Fischer, Nico, 70197 Stuttgart (DE); Lang, Timo, 70794 Filderstadt (DE)
(74) Vertreter: Ruckh, Rainer Gerhard

(57) **Zusammenfassung**

Die Erfindung betrifft eine Anordnung (1) mit einer zwei Kupplungsteile (10, 11) umfassenden Kupplungsverbindung (9). Mittels einer Schraubverbindung können die Kupplungsteile (10, 11) verbunden werden und einen Flüssigkeitskanal ausbilden. Am ersten Kupplungsteil (10) ist als Anschlussmittel ein mehrgängiges Gewinde (13) als Bestandteil der Schraubverbindung vorhanden. Am zweiten Kupplungsteil (11) ist als Anschlussmittel ein mehrgängiges Gegengewinde (19) als weiterem Bestandteil der Schraubverbindung vorhanden.

## Beschreibung

Die Erfindung betrifft eine Anordnung mit einer Kupplungsverbindung.

Eine derartige Anordnung dient generell zum Transport von Flüssigkeit über einen Flüssigkeitskanal. Die Anordnung umfasst eine Kupplungsverbindung mit zwei Kupplungsteilen. Die Kupplungsverbindungen werden zur Bildung des Flüssigkeitskanals mittels einer Schraubverbindung verbunden.

Ein typisches Anwendungsbeispiel ist ein Tankwagen, der in einem Tank Flüssigkeit transportiert. Der Tankwagen liefert Flüssigkeit an, insbesondere für einen in einem Gebäude stationär angeordneten Behälter. Die Flüssigkeit kann in Form von Spezialchemikalien gebildet sein, die zur Durchführung industrieller Prozesse, z.B. in der Halbleiterindustrie, benötigt wird. Der oder die Behälter sind dann in entsprechenden Industriegebäuden integriert.

Auf dem Tankwagen ist der Tank vorhanden, der über eine Leitung mit einem Kupplungsteil verbunden ist. Der Behälter im Gebäude ist direkt oder über eine weitere Leitung mit einem weiteren Kupplungsteil verbunden.

Zur Anlieferung von Flüssigkeit fährt der Tankwagen das Gebäude an, so dass das dort vorhandene Kupplungsteil mit dem Kupplungsteil durch die Schraubverbindung verbunden werden kann, um so die Kupplungsverbindung auszubilden. Damit wird ein durchgehender Flüssigkeitskanal vom Tank zum Behälter geschaffen, so dass Flüssigkeit vom Tank in den Behälter gefördert werden kann.

Zur Ausbildung der Schraubverbindung weist eines der Kupplungsteile ein Gewinde und das weitere Kupplungsteil ein Gegengewinde auf.

Die Herstellung der Schraubverbindung ist relativ umständlich und zeitaufwändig, da das Gegengewinde relativ zum Gewinde über mehrere Umdrehungen, typischerweise drei bis vier Umdrehungen, gedreht werden muss, damit die Schraubverbindung stabil hergestellt ist.

Ein weiterer Nachteil besteht darin, dass das Gewinde und das Gegengewinde leicht verkanten. Dies erschwert nicht nur die Herstellung der Schraubverbindung. Vielmehr besteht eine erhebliche Gefahr der Beschädigung des Gewindes und Gegengewindes. Die Gefahr von Beschädigungen besteht insbesondere dann, wenn das Gewinde und das Gegengewinde aus Kunststoff bestehen.

Der Erfindung liegt die Aufgabe zugrunde für eine Anordnung der eingangs genannten Art Anschlussmittel mit hoher Funktionalität und Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Anordnung mit einer zwei Kupplungsteile umfassenden Kupplungsverbindung. Mittels einer Schraubverbindung können die Kupplungsteile verbunden werden und einen Flüssigkeitskanal ausbilden. Am ersten Kupplungsteil ist als Anschlussmittel ein mehrgängiges Gewinde als Bestandteil der Schraubverbindung vorhanden. Am zweiten Kupplungsteil ist als Anschlussmittel ein mehrgängiges Gegengewinde als weiterem Bestandteil der Schraubverbindung vorhanden.

Mit der erfindungsgemäßen Anordnung wird generell Flüssigkeit über einen Flüssigkeitskanal gefördert.

Der Flüssigkeitskanal zur Förderung von Flüssigkeit wird dadurch gebildet, dass eine Kupplungsverbindung hergestellt wird, in dem zwei Kupplungsteile mittels einer Schraubverbindung verbunden werden.

Erfindungsgemäß weist ein Kupplungsteil als Anschlussmittel ein mehrgängiges Gewinde auf. Das weitere Kupplungsteil weist ein korrespondierendes mehrgängiges Gegengewinde auf. Mit den so ausgebildeten Kupplungsteilen kann schnell und zuverlässig eine Schraubverbindung gebildet werden, d.h. mit den Kupplungsteilen kann schnell und einfach die Kupplungsverbindung gebildet werden, um den Flüssigkeitskanal bereitzustellen.

Ein wesentlicher Vorteil des erfindungsgemäßen mehrgängigen Gewindes besteht darin, dass mit wenigen Umdrehungen, vorzugsweise nur ein Drittel einer Umdrehung des mehrgängigen Gewindes relativ zum mehrgängigen Gegengewinde, eine sichere und stabile Schraubverbindung hergestellt werden kann.

Ein weiterer wesentlicher Vorteil des erfindungsgemäßen mehrgängigen Gewindes besteht darin, dass bei Anschrauben des mehrgängigen Gewindes am mehrgängigen Gegengewinde die Gefahr eines Verkantens gegenüber herkömmlichen eingängigen Gewinden erheblich reduziert ist. Ein derartiges Verkanten verzögert nicht nur die Herstellung der Schraubverbindung, da nach einem Verkanten das mehrgängige Gewinde am mehrgängigen Gegengewinde neu angesetzt werden muss. Vielmehr besteht durch ein derartiges Verkanten die Gefahr, dass das mehrgängige Gewinde und/oder das mehrgängige Gegengewinde beschädigt werden, so dass dann keine Schraubverbindung mehr hergestellt werden kann. Diese Gefahr ist insbesondere dann gegeben, wenn die Anschlussmittel mit dem mehrgängigen Gewinde und dem mehrgängigen Gegengewinde aus Kunststoff bestehen.

Gemäß einer vorteilhaften Ausführungsform ist das mehrgängige Gewinde ein Außengewinde und das mehrgängige Gegengewinde ein Innengewinde.

Die so gebildete Schraubverbindung ist insbesondere flüssigkeitsdicht, so dass an der Schraubverbindung keine Leckagen entstehen.

Gemäß einer konstruktiv vorteilhaften Ausgestaltung ist das Außengewinde auf der Außenseite eines hohlzylindrischen Schafts des ersten Kupplungsteils angeordnet.

Korrespondierend hierzu ist das Innengewinde in einer Überwurfmutter des zweiten Kupplungsteils angeordnet.

Die so ausgebildete Schraubverbindung weist einen einfachen, robusten Aufbau auf und kann leicht geschlossen und wieder gelöst werden.

Dabei wird die Schraubverbindung durch manuelles Betätigen der Überwurfmutter gebildet oder gelöst.

Die manuelle Betätigung kann einfach und schnell durchgeführt werden, da zur Herstellung der Schraubverbindung nur wenige, vorzugsweise nur ein Drittel einer Umdrehung des mehrgängigen Gewindes relativ zum mehrgängigen Gegengewinde erforderlich sind.

Ist die Schraubverbindung gebildet und damit die Kupplungsverbindung hergestellt, kann Flüssigkeit über die Kupplungsverbindung als Bestandteil des Flüssigkeitskanals fließen.

Vorteilhaft ist in jedem Kupplungsteil ein Ventil vorhanden, wobei bei Bildung der Kupplungsverbindung die Ventile geöffnet sind.

Das Öffnen und Schließen der Ventile erfolgt vorteilhaft zwangsgeführt, insbesondere über mechanische Stellmechanismen.

Sind die Kupplungsteile voneinander getrennt, sorgen Verriegelungsmittel in den Kupplungsteilen dafür, dass die Ventile geschlossen sind, so dass an den Kupplungsteilen keine Flüssigkeit austreten kann. Sind die Kupplungsteile miteinander verbunden, werden die Ventile mittels der Stellmechanismen geöffnet, so dass Flüssigkeit über den Flüssigkeitskanal in der Kupplungsverbindung fließen kann.

Gemäß einer vorteilhaften Ausführungsform bestehen die Anschlussmittel der Kupplungsteile aus Kunststoff, wobei vorteilhaft die gesamten Kupplungsteile aus Kunststoffteilen aufgebaut sind.

Die vorgenannten Teile können dann rationell und kostengünstig als Kunststoff-Spritzgussteile gefertigt werden. Zudem sind diese säurebeständiger als Metallteile, die ebenfalls verwendet werden können.

Da die Anschlussmittel aus Kunststoff bestehen, bestehen auch die mehrgängigen Gewinde aus Kunststoff. Dies ist jedoch deshalb unkritisch, da durch die Ausbildung der Gewinde als mehrgängige Gewinde ein Verkanten bei Herstellung der Schraubverbindung vermieden wird und daher keine Beschädigungen der mehrgängigen Gewinde zu befürchten sind.

Durch Herstellung der Schraubverbindung zwischen den Kupplungsteilen wird die Kupplungsverbindung hergestellt und damit ein Flüssigkeitskanal für einen Flüssigkeitstransport bereitgestellt. Generell kann somit Flüssigkeit von einem Behälter zu einem anderen Behälter über den Flüssigkeitskanal transportiert werden.

Gemäß einer vorteilhaften Ausgestaltung wird durch Bildung der Kupplungsverbindung ein Flüssigkeitskanal zwischen dem Tank eines Tankwagens und einem stationär, vorzugsweise in einem Gebäude angeordneten Behälter, gebildet, so dass Flüssigkeit aus dem Tank in den Behälter gefördert wird. Generell ist natürlich auch eine Förderung von Flüssigkeit in umgekehrter Richtung möglich.

Typischerweise ist das auf dem Tankwagen vorgesehene Kupplungsteil über eine Leitung, wie z.B. einem Schlauch, mit dem Tank verbunden. Das weitere Kupplungsteil der Kupplungsverbindung ist direkt am Behälter vorgesehen oder mit diesem über eine Leitung, wie z.B. einem Schlauch oder einer Rohrleitung verbunden.

Die Erfindung wird im Folgenden anhand der Zeichnungen erläutert. Es zeigen:
- Figur 1:: Schematische Darstellung eines Ausführungsbeispiels der erfindungsgemäßen Anordnung mit einer Kupplungsverbindung.
- Figur 2:: Perspektive Darstellung der Kupplungsteile der Kupplungsverbindung gemäß Figur 1.
- Figur 3:: Seitenansicht der Kupplungsteile gemäß Figur 2.

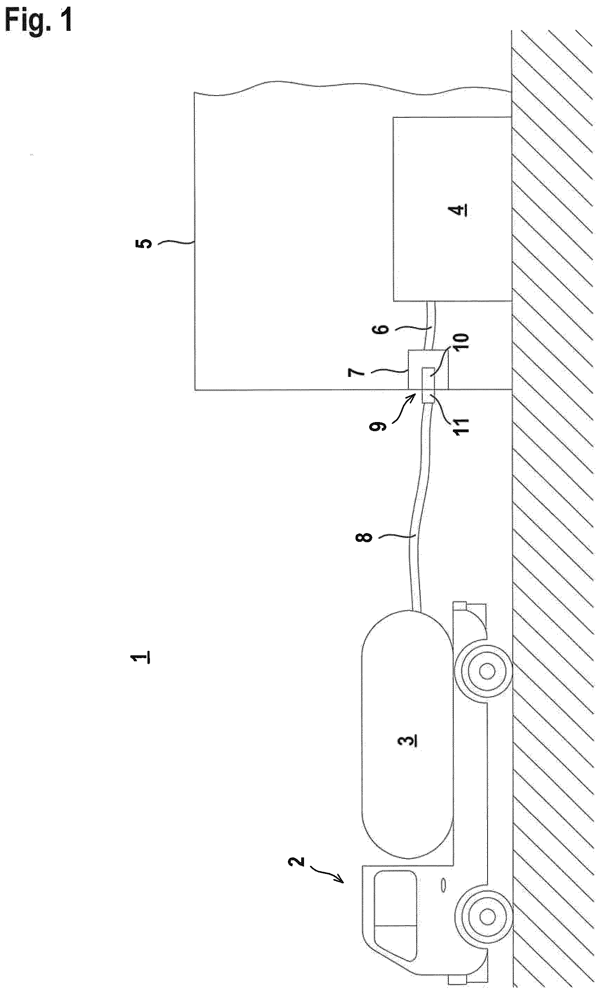

Figur 1 zeigt stark schematisiert eine Anordnung der erfindungsgemäßen Anordnung 1.

Die Anordnung 1 umfasst einen Tankwagen 2 mit einem Tank 3, in welchem Flüssigkeit gelagert ist. Bei der Flüssigkeit kann es sich um flüssige Spezialchemikalien handeln, die zur Durchführung industrieller Prozesse benötigt werden.

Die im Tank 3 des Tankwagens 2 angelieferte Flüssigkeit wird einem Behälter 4 zugeführt, der stationär angeordnet ist. Im vorliegenden Fall ist der Behälter 4 in einem Industriegebäude 5 angeordnet.

Im vorliegenden Fall ist der Behälter 4 über eine Leitung 6, die von einer Rohrleitung oder einem Schlauch gebildet sein kann, an eine Anschlusseinheit 7 angeschlossen. Prinzipiell kann der Behälter 4 direkt mit der Anschlusseinheit 7 verbunden sein.

Vom Tank 3 des Tankwagens 2 wird eine Leitung 8 zur Anschlusseinheit 7 geführt, wobei die Leitung 8 vorteilhaft von einem Schlauch gebildet ist.

Um einen durchgehenden Flüssigkeitskanal vom Tank 3 zum Behälter 4 über die Leitungen 6,8 zu bilden, ist erfindungsgemäß eine Kupplungsverbindung 9 vorgesehen. Die Kupplungsverbindung 9 umfasst zwei Kupplungsteile 10, 11, wobei ein erstes Kupplungsteil 10 in der Anschlusseinheit 7 und ein zweites Kupplungsteil 11 am freien Ende der mit dem Tank 3 gekoppelten Leitung 6 angeordnet ist.

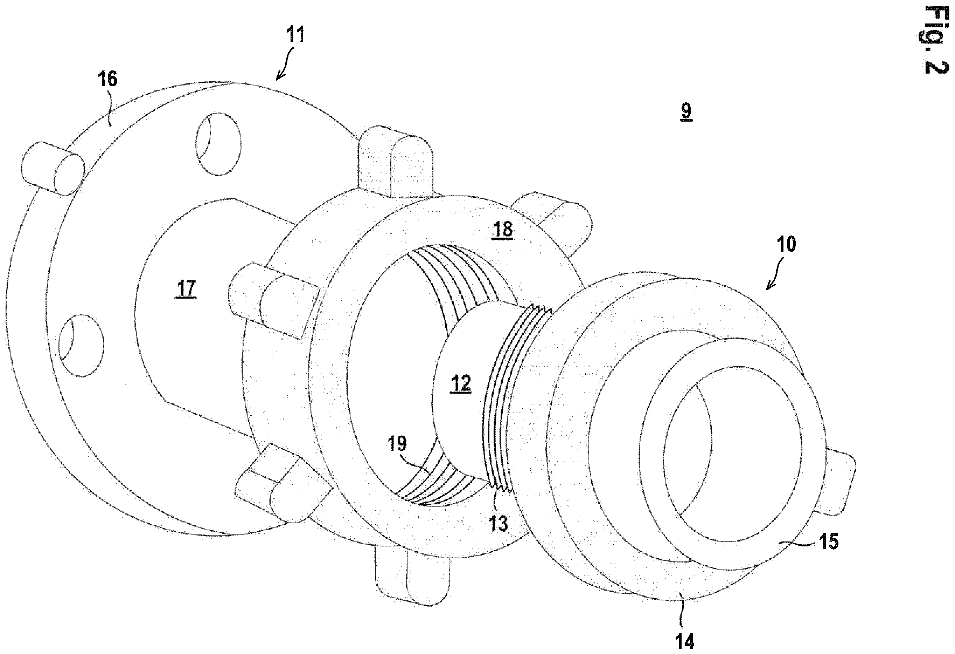

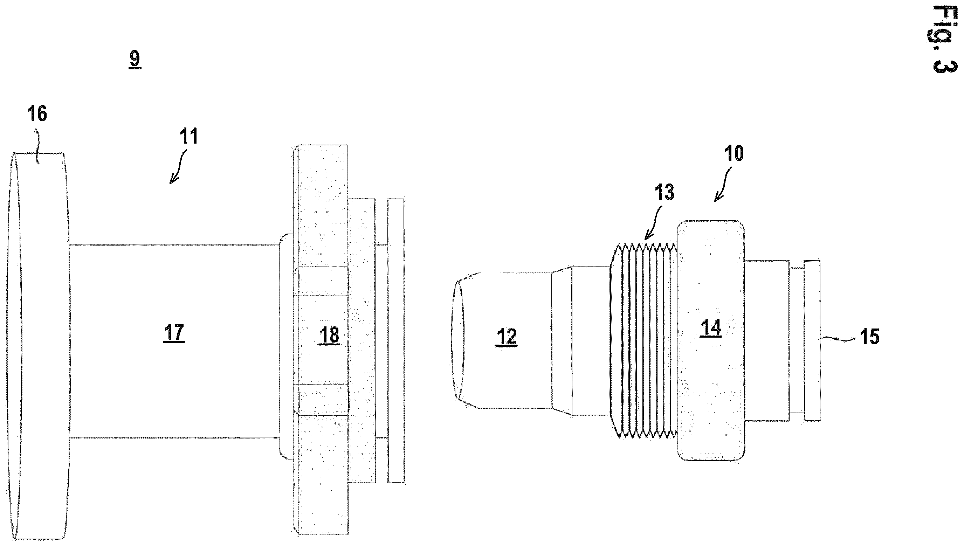

Die Kupplungsverbindung 9 mit den beiden Kupplungsteilen 10, 11 ist in den Figuren 2 und 3 separat dargestellt.

Die Kupplungsteile 10, 11 bestehen aus Kunststoff, wobei die Kupplungsteile 10, 11 aus einem oder mehreren Kunststoff-Spritzgussteilen aufgebaut sind. Die Kupplungsteile 10, 11 bilden rohrförmige Hohlkörper, in welchen Flüssigkeit transportiert werden kann.

Die Kupplungsteile 10, 11 können mittels einer Schraubverbindung zur Kupplungsverbindung 9 verbunden werden. Die Schraubverbindung wird manuell betätigt, um so die Kupplungsteile 10, 11, zu verbinden oder wieder zu lösen.

In jedem Kupplungsteil 10, 11 ist ein Ventil vorhanden (in den Figuren nicht dargestellt).

Das Öffnen und Schließen der Ventile erfolgt vorteilhaft zwangsgeführt, insbesondere über mechanische Stellmechanismen.

Sind die Kupplungsteile 10, 11 voneinander getrennt, sorgen Verriegelungsmittel in den Kupplungsteilen 10, 11 dafür, dass die Ventile geschlossen sind, so dass an den Kupplungsteilen 10, 11 keine Flüssigkeit austreten kann. Sind die Kupplungsteile 10, 11 miteinander verbunden, werden die Ventile mittels der Stellmechanismen geöffnet, so dass Flüssigkeit über den Flüssigkeitskanal in der Kupplungsverbindung 9 fließen kann.

Zur Betätigung der Stellmechanismen können Bedienelemente vorgesehen sein. Alternativ werden die Stellmechanismen bei Herstellen oder Lösen der Kupplungsverbindung 9 selbsttätig betätigt.

Zur Herstellung der Schraubverbindung weisen die Kupplungsteile 10, 11 Anschlussmittel auf, die jeweils aus Kunststoff bestehen.

Wie die Figuren 2 und 3 zeigen, besteht das erste Kupplungsteil 10 im Wesentlichen aus einem hohlzylindrischen Körper. Auf der dem zweiten Kupplungsteil 11 zugewandten Vorderseite weist das erste Kupplungsteil 10 einen hohlzylindrischen Schaft 12 auf. Auf der äußeren Mantelfläche des hohlzylindrischen Schafts 12 ist als erstes Anschlussmittel ein mehrgängiges Gewinde 13 in Form eines Außengewindes vorhanden. An das mehrgängige Gewinde schließt ein verbreitertes Segment 14 des rohrförmigen Körpers an. An der dem zweiten Kupplungsteil 11 abgewandten Rückseite weist das Kupplungsteil 10 eine Anschlusskontur 15 zum Anschluss an die Leitung 6 oder den Behälter 4 auf.

Auch das zweite Kupplungsteil 11 besteht im Wesentlichen aus einem hohlzylindrischen Körper. An der dem ersten Kupplungsteil 10 abgewandten Rückseite des zweiten Kupplungsteils 11 befindet sich ein Flansch 16 zum Anschluss an die zum Tank 3 führende Leitung 8.

Auf einem hohlzylindrischen Rohrsegment 17 ist eine Überwurfmutter 18 gelagert.

An der Innenwand der Überwurfmutter 18 befindet sich als zweites Anschlussmittel ein mehrgängiges Gegengewinde 19 in Form eines Innengewindes.

Sowohl das mehrgängige Gewinde 13 als auch das mehrgängige Gegengewinde 19 weisen mehrere Anschnitte auf.

Mit dem mehrgängigen Gewinde 13 und dem hierzu korrespondierenden mehrgängigen Gegengewinde 19 wird durch Herstellen der Schraubverbindung die Kupplungsverbindung 9 gebildet, indem die Überwurfmutter 18 mit dem mehrgängigen Gegengewinde 19 auf das mehrgängige Gewinde 13 aufgeschraubt wird. Die Kupplungsverbindung 9 bildet eine flüssigkeitsdichte Verbindung, so dass durch die Kupplungsverbindung 9 als Bestandteil des Flüssigkeitskanals Flüssigkeit ohne Gefahr von Leckagen strömen kann.

Da das Außengewinde und Innengewinde der Anschlussmittel als mehrgängige Gewinde ausgeführt sind, reichen weniger Umdrehungen, vorzugsweise nur ein Drittel einer Umdrehung des Außengewindes am Innengewinde, aus, um die Schraubverbindung fest und stabil auszubilden. Durch die Ausbildung der Anschlussmittel als mehrgängige Gewinde wird ein Verkanten des Außengewindes am Innengewinde vermieden.

Sobald durch Bilden des Schraubverbindung zwischen dem mehrgängigen Gewinde 13 und dem mehrgängigen Gegengewinde 19 die Kupplungsteile 10, 11 zur Kupplungsverbindung 9 verbunden sind, kann Flüssigkeit aus dem Tank 3 über den Flüssigkeitskanal dem Behälter 4 zugeführt werden.

Nach dem Befüllvorgang werden die Kupplungsteile 10, 11 durch Lösen der Schraubverbindung wieder getrennt.

### Bezugszeichenliste

- (1): Anordnung
- (2): Tankwagen
- (3): Tank
- (4): Behälter
- (5): Industriegebäude
- (6): Leitung
- (7): Anschlusseinheit
- (8): Leitung
- (9): Kupplungsverbindung
- (10): Kupplungsteil
- (11): Kupplungsteil
- (12): holzylindrischer Schaft
- (13): mehrgängiges Gewinde
- (14): Segment
- (15): Anschlusskontur
- (16): Flansch
- (17): Rohrsegment
- (18): Überwurfmutter
- (19): mehrgängiges Gegengewinde

## Patentansprüche

1. Anordnung (1) mit einer Kupplungsverbindung (9) umfassend zwei Kupplungsteile (10, 11), die mittels einer Schraubverbindung verbunden werden können und einen Flüssigkeitskanal ausbilden, **dadurch gekennzeichnet, dass** am ersten Kupplungsteil (10) als Anschlussmittel ein mehrgängiges Gewinde (13) als Bestandteil der Schraubverbindung vorhanden ist, und dass am zweiten Kupplungsteil (11) als Anschlussmittel ein mehrgängiges Gegengewinde (19) als weiterem Bestandteil der Schraubverbindung vorhanden ist.

2. Anordnung (1) nach Anspruch 1, **dadurch gekennzeichnet, dass** das mehrgängige Gewinde ein Außengewinde ist, und dass das mehrgängige Gegengewinde ein Innengewinde ist.

3. Anordnung (1) nach Anspruch 2, **dadurch gekennzeichnet, dass** das Außengewinde auf der Außenseite eines hohlzylindrischen Schafts (12) des ersten Kupplungsteils (10) angeordnet ist.

4. Anordnung (1) nach einem der Ansprüche 2 oder 3, **dadurch gekennzeichnet, dass** das Innengewinde in einer Überwurfmutter (18) des zweiten Kupplungsteils (11) angeordnet ist.

5. Anordnung (1) nach Anspruch 4, **dadurch gekennzeichnet, dass** die Schraubverbindung durch manuelles Betätigen der Überwurfmutter (18) gebildet oder gelöst wird.

6. Anordnung (1) nach einem der Ansprüche 1 bis 5, **dadurch gekennzeichnet, dass** die Anschlussmittel aus Kunststoff bestehen.

7. Anordnung (1) nach einem der Ansprüche 1 bis 6, **dadurch gekennzeichnet, dass** die Kupplungsteile (10, 11) aus Kunststoffteilen aufgebaut sind.

8. Anordnung (1) nach einem der Ansprüche 1 bis 7, **dadurch gekennzeichnet, dass** das erste Kupplungsteil (10) direkt oder über eine Leitung (6) mit einem Behälter (4) verbunden ist.

9. Anordnung (1) nach einem der Ansprüche 1 bis 8, **dadurch gekennzeichnet, dass** das zweite Kupplungsteil (11) über eine Leitung (8) mit einem Tank (3) eines Tankwagens (2) verbunden ist.

10. Anordnung (1) nach einem der Ansprüche 8 oder 9, **dadurch gekennzeichnet, dass** die oder jede Leitung (6, 8) in Form eines Schlauchs ausgebildet ist.

11. Anordnung (1) nach einem der Ansprüche 1 bis 10, **dadurch gekennzeichnet, dass** in jedem Kupplungsteil (10, 11) ein Ventil vorhanden ist, wobei bei Bildung der Kupplungsverbindung (9) die Ventile geöffnet sind.
